# EUROPEAN PATENT APPLICATION

(11) **EP 3 193 160 A1**
(43) Date of publication of application: **19.07.2017**
(21) Application number: 17151761.8
(22) Date of filing: 17.01.2017
(51) Int. Cl.: G01N 21/3504, G01N 21/27, G01N 21/359, G01N 21/39, G01N 21/31

(54) **GAS ABSORPTION ANALYZING APPARATUS AND GAS ABSORPTION ANALYZING METHOD**

(30) Priority: 18.01.2016 JP 2016007053
(71) Applicant: Horiba, Ltd., Kyoto-shi, Kyoto 601-8510 (JP)
(72) Inventor: IDO, Takuya, Kyoto, 601-8510 (JP)
(74) Representative: Müller Hoffmann & Partner

(57) **Abstract**

To check an influence to an absorbance due to a temporal variation of measuring light in an analyzing apparatus, the analyzing apparatus (100, 200) includes a reference gas filling space (Sc), a spectrum generating portion (75), and a spectrum comparing portion (76). The reference gas filling space (Sc) is formed on an optical path of measuring light (Lm) and is filled with a reference gas (Gc) different from a measurement target gas (Gs) at a first concentration. The spectrum generating portion (75) generates measured spectrum data (Dms), associating a wavelength of a detection light beam as the measuring light (Lm) after passing through the reference gas filling space (Sc) with a relative intensity of the detection light beam. The spectrum comparing portion (76) calculates a difference between the measured spectrum data (Dms) and reference absorption spectrum data (Dss) obtained by measuring in advance an absorption spectrum of the reference gas (Gc) at the first concentration by a direct absorption method.

## Description

### TECHNICAL FIELD

The present invention relates to an analyzing apparatus for analyzing a gas using light absorption and to an analyzing method in the analyzing apparatus.

### BACKGROUND ART

Conventionally, there is known an analyzing apparatus that analyzes a measurement target gas to be measured using light absorption. In this analyzing apparatus, calibration is performed so as to reduce an influence to an analysis result due to a characteristic variation of a light source or the like.

Patent Citation 1 discloses a calibration method and a calibration apparatus for calibrating an analyzing apparatus that analyzes a measurement target gas using light absorption. In the calibration method and the calibration apparatus disclosed in Patent Citation 1, calibration of a moisture concentration measuring apparatus for measuring a concentration of moisture is performed using a relationship between an absorption spectrum intensity of moisture at a concentration to be measured and an absorption spectrum intensity of a gas whose relationship with the absorption spectrum intensity is known.

### PRIOR ART CITATIONS

### PATENT CITATION

Patent Citation 1: JP-A-2013-130509

### SUMMARY OF INVENTION

### TECHNICAL PROBLEM

The above-mentioned calibration method of Patent Citation 1 obtains a differential spectrum by modulating measuring light, and therefore it has a problem that the obtained signal intensity is not an absorbance and that accuracy of correction is deteriorated when a temporal intensity variation occurs.

It is an object of the present invention to check an influence to an absorbance due to a detailed temporal variation of the measuring light in the analyzing apparatus that analyzes a measurement target gas using light absorption.

### TECHNICAL SOLUTION

A plurality of aspects of the present invention are described below for achieving the object. These aspects can be arbitrarily combined as necessary.

An analyzing apparatus according to one aspect of the present invention is an apparatus for analyzing a measurement target gas using measuring light emitted from a light source. The analyzing apparatus includes a reference gas filling space, a spectrum generating unit, and a spectrum comparing unit. The reference gas filling space is formed on an optical path of the measuring light and filled with a reference gas different from the measurement target gas at a first concentration. The spectrum generating unit generates measured spectrum data, in which a wavelength of a detection light beam is associated with a relative intensity of the detection light beam. The detection light beam is the measuring light that has passed through the reference gas filling space. The spectrum comparing unit calculates a difference between the measured spectrum data and reference absorption spectrum data obtained by measuring in advance an absorption spectrum of the reference gas at the first concentration by a direct absorption method.

In this way, it is possible to check an influence to an absorbance due to a temporal variation of the measuring light.

The spectrum generating unit may calculate the relative intensity of the detection light beam based on a relationship between an intensity of the measuring light that is not absorbed by the reference gas and an intensity of the detection light beam.

The spectrum generating unit may generate analysis spectrum data to be used for analyzing the measurement target gas. The analysis spectrum data is data in which a wavelength of an analyzing detection light beam is associated with a relative intensity of the analyzing detection light beam. The analyzing detection light beam is the measuring light that has passed through an area in which the measurement target gas exists. In this case, the relative intensity of the analyzing detection light beam is corrected by using an intensity variation function that matches a peak intensity of the relative intensity of the detection light beam in the measured spectrum data with an absorbance at a corresponding absorption peak in the reference absorption spectrum data.

In this way, it is possible to calculate the relative intensity of the analyzing detection light beam having an intensity corresponding to the absorbance at the absorption peak of the measurement target gas in the analysis spectrum data.

The wavelength of the analyzing detection light beam in the analysis spectrum data may be calculated by using a wavelength variation function that matches a peak position of the relative intensity of the detection light beam in the measured spectrum data with a corresponding absorption peak position of the reference absorption spectrum data.

In this way, the peak position of the relative intensity of the analyzing detection light beam in the analysis spectrum data can be matched with the corresponding absorption peak position of the measurement target gas.

The analyzing apparatus may further include a light source controller and a measured data obtaining unit. The light source controller outputs to the light source a measuring light control signal that controls the intensity and/or the wavelength of the measuring light, while temporally varying the signal within a predetermined signal value range. The measured data obtaining unit measures the intensity of the detection light beam and generates measured data, by associating the intensity of the detection light beam with the measuring light control signal when the intensity of the detection light beam is measured. In this case, the spectrum generating unit generates the measured spectrum data based on the measured data. In this way, the measured spectrum data can be obtained from a measured value of the intensity of the detection light beam.

When a difference between the reference absorption spectrum data and the measured spectrum data becomes a predetermined value or more, the light source controller may change the signal value range of the measuring light control signal from the current signal value range. In this way, in analysis of the measurement target gas, it is possible to obtain appropriate analysis spectrum data that can be used for analysis.

The analyzing apparatus may further include a reference gas introduction device that is configured to introduce the reference gas into the reference gas filling space. In this way, it is possible to accurately fill the reference gas in the reference gas filling space while controlling the pressure. In addition, the kind of gas of the reference gas to be introduced is not limited.

The measurement target gas may be one of moisture, carbon monoxide, carbon dioxide, oxygen, hydrogen chloride, hydrogen fluoride, ammonia, tetramethyl indium, and trimethyl gallium. In this way, the analyzing apparatus can provide the above-mentioned effect in particular for the measurement target gas that is difficult to handle due to its adsorptivity and/or corrosiveness, and the measurement target gas that cannot be easily prepared on site as a gas with a high concentration.

The reference gas may be moisture or hydrocarbon gas. In this way, using absorption peaks, many of which appear within wavelength range used for analysis, the difference between the measured spectrum data and the reference absorption spectrum data can be accurately calculated.

An analyzing method according to another aspect of the present invention is a method for analyzing a measurement target gas using measuring light emitted from a light source, and the method includes:
forming a reference gas filling space on an optical path of the measuring light, the reference gas filling space being filled with a reference gas different from the measurement target gas at a first concentration;
generating measured spectrum data, in which a wavelength of a detection light beam is associated with a relative intensity of the detection light beam, the detection light beam being the measuring light that has passed through the reference gas filling space; and
calculating a difference between the measured spectrum data and reference absorption spectrum data obtained by measuring in advance an absorption spectrum of the reference gas at the first concentration by a direct absorption method.
In this way, it is possible to check an influence to an absorbance due to a temporal variation of the measuring light.

### ADVANTAGEOUS EFFECTS

In the analyzing apparatus that analyzes a measurement target gas using light absorption, a temporal variation of the measuring light can be checked in detail.

### BRIEF DESCRIPTION OF DRAWINGS

Fig. 1 is a schematic cross-sectional view of an analyzing apparatus according to a first embodiment.
Fig. 2 is a diagram illustrating a structure of a controller.
Fig. 3 is a flowchart illustrating a characteristic variation monitoring method of measuring light in the analyzing apparatus.
Fig. 4 is a graph illustrating an example of measured data.
Fig. 5 is a graph illustrating an example of preprocess data.
Fig. 6 is a graph illustrating an example of comparison between measured spectrum data and reference absorption spectrum data.
Fig. 7 is a graph illustrating an example of a wavelength variation function.
Fig. 8 is a graph illustrating an example of comparison between the measured spectrum data (after wavelength variation function correction) and the reference absorption spectrum.
Fig. 9 is a graph illustrating an example of an intensity variation function.
Fig. 10 is a graph illustrating an example of comparison between the measured spectrum data (after wavelength variation function correction plus intensity variation function correction) and the reference absorption spectrum.
Fig. 11 is a graph illustrating an example of analysis measured data.
Fig. 12 is a graph illustrating an example of analysis spectrum data.
Fig. 13 is a diagram illustrating a structure of an analyzing apparatus according to a second embodiment.

### DESCRIPTION OF EMBODIMENTS

### (1) Overall structure of gas analyzing apparatus

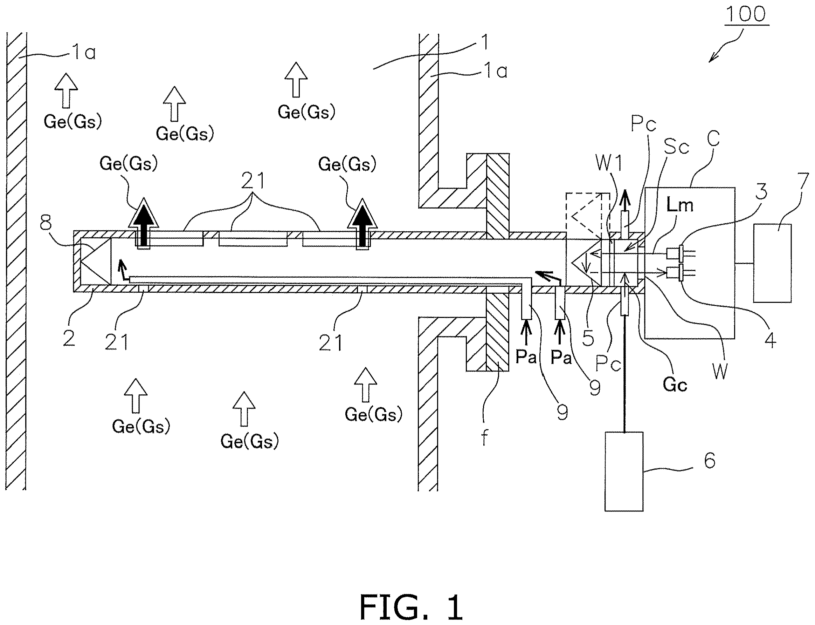

With reference to Fig. 1, an analyzing apparatus 100 according to an embodiment of the present invention is described. Fig. 1 is a schematic cross-sectional view of the analyzing apparatus.

The analyzing apparatus 100 is, for example, an apparatus that analyzes a measurement target gas Gs contained in exhaust gas Ge flowing in a flue 1. Alternatively, the analyzing apparatus 100 may be an apparatus that analyzes a process gas as the measurement target gas Gs, which is generated in various manufacturing processes (for example, a semiconductor process, petrochemical process, and etc.). The analyzing apparatus 100 can analyze, for example, moisture (H₂O oxygen (O₂), hydrogen chloride (HCl), hydrogen fluoride (HF), hydrogen bromide (HBr), ammonia (NH₃), nitrogen oxides (NOx) such as nitric oxide (NO), nitric dioxide (NO₂), and nitrous oxide (N₂O), carbon monoxide (CO), carbon dioxide (CO₂), hydrogen sulfide (H₂S), sulfur oxide (SOx) such as sulfur dioxide (SO₂), tetramethyl indium (TMI), trimethyl gallium (TMGA), and the like as the measurement target gas Gs.

The analyzing apparatus 100 of this embodiment includes a probe tube 2, which is connected to a wall 1a of the flue 1 via a flange f and has a part inserted in the flue 1. The probe tube 2 is a cylindrical member with an introduction hole 21 disposed at a part inserted in the flue 1. The introduction hole 21 introduces the exhaust gas Ge inside the probe tube 2 by diffusion. The probe tube 2 is made of a material such as a metal that is durable against strong acid and/or strong alkali. Alternatively, the surface of the probe tube 2 may be coated.

The analyzing apparatus 100 includes a light source 3 disposed inside a casing C at a proximal end of the probe tube 2. The light source 3 emits measuring light Lm to an inside space of the probe tube 2. The light source 3 receives a measuring light control signal s described later and emits the measuring light Lm having a wavelength and an intensity corresponding to the measuring light control signal s. In this embodiment, the light source 3 is a distributed feedback (DFB) laser diode. In this case, the measuring light Lm is infrared light having a wavelength in a range of 0.7 µm to 4 µm, for example. Further, in this case, the measuring light control signal s is a current supplied to the light source 3.

Alternatively, a light source equipped with an external resonator can be used as the light source 3.

The analyzing apparatus 100 includes a light detector 4 disposed near the light source 3 outside the wall 1a. The light detector 4 is, for example, a photoelectric conversion device such as a photodiode, which outputs detection light intensity I, which is an intensity of the measuring light Lm that has passed through the inside space of the probe tube 2, as a detection light intensity signal.

In this embodiment, the light source 3 and the light detector 4 are isolated from the inside space of the probe tube 2 by an optical window W that can transmit the measuring light Lm. In addition, an optical window W1 is disposed at a position apart from the optical window W by a predetermined distance in the inside space of the probe tube 2, and the optical window W1 forms a reference gas filling space Sc (hereinafter referred to as a "filling space Sc") with the optical window W on an optical path of the measuring light Lm and can transmit the measuring light Lm. In this way, by forming the filling space Sc using the two optical windows, the sealing of the filling space Sc can be secured.

Note that the filling space Sc is not limited to the one formed using the two optical windows W and W1, but it may be formed by disposing a member, which has a space filled with a reference gas Gc at a first concentration and is capable of transmitting the measuring light Lm, in the inside space of the probe tube 2. Further, without using the optical window W1, the filling space Sc may be formed using a first reflector 5 (described later) disposed in the inside space of the probe tube 2 and the optical window W

In addition, if the filling space Sc is formed using the two optical windows W and W1, when obtaining measured spectrum data Dms described later, a second reflector 8 (described later) may be used for reflecting the measuring light Lm without inserting the first reflector 5.

The analyzing apparatus 100 includes the first reflector 5. The first reflector 5 is, for example, a corner cube or a movable plane mirror, which can be inserted into and detached from the flue 1 side of the filling space Sc by a drive mechanism (not shown). As illustrated in Fig. 1, when the first reflector 5 is in the inside space of the probe tube 2, the measuring light Lm after passing through the filling space Sc is reflected by the first reflector 5 and enters the light detector 4.

Note that the first reflector 5 may be detached from or inserted into the inside space of the probe tube 2 during execution of the analysis.

The analyzing apparatus 100 includes a reference gas introduction device 6. The reference gas introduction device 6 fills the filling space Sc with the reference gas Gc that is different from the measurement target gas Gs. The reference gas introduction device 6 is a gas supplying device that introduces the reference gas Gc at the first concentration. In this way, the reference gas introduction device 6 can adjust pressure of the reference gas Gc and introduce the same with high accuracy regardless of the gas type.

In this embodiment, the reference gas Gc is, for example, hydrocarbon gas such as methane (CH₄), ethylene (C₂H₄) or acetylene (C₂H₂), or moisture (H₂O). In general, moisture and hydrocarbon gas have many absorption peaks in a wavelength region used for analysis. Therefore, using moisture or hydrocarbon gas as the reference gas Gc, it is possible to accurately calculate a difference between the measured spectrum data Dms and reference absorption spectrum data Dss.

The analyzing apparatus 100 includes a controller 7. The controller 7 is a computer system including a central processing unit (CPU), a storage device such as a RAM and a ROM, a display (such as a liquid crystal display), and various interfaces. In addition, functions of the individual units of the controller 7 described below may be realized as a program that can be stored in the storage device and can be executed by the computer system.

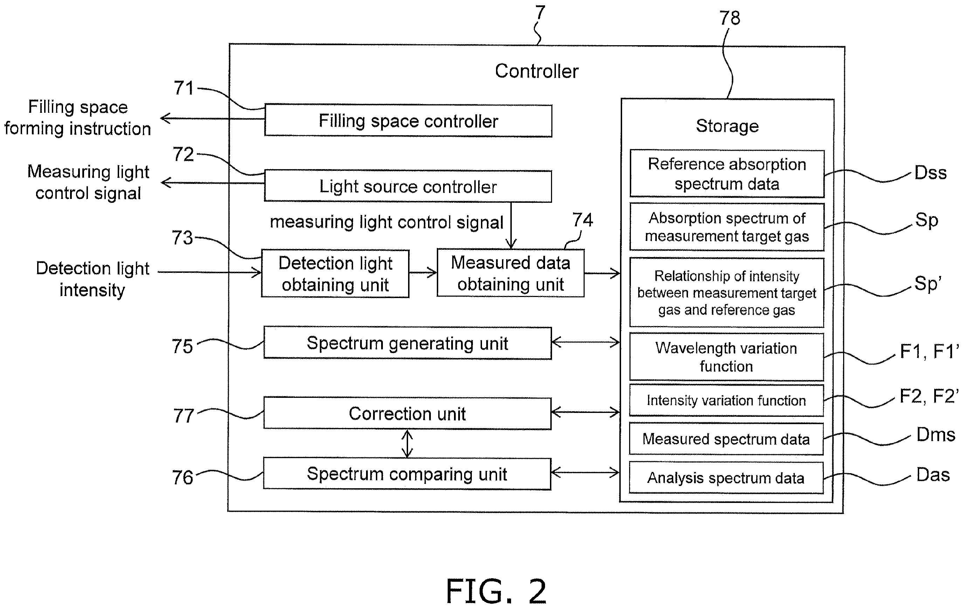

The controller 7 controls the analyzing apparatus 100. As illustrated in Fig. 2, the controller 7 includes a filling space controller 71, a light source controller 72 (such as a D/A converter), a detection light obtaining unit 73 (such as an A/D converter), a measured data obtaining unit 74, a spectrum generating unit 75, a spectrum comparing unit 76, a correction unit 77, and a storage 78 corresponding to a storage area of the storage device of the controller 7. Functions and operations of the individual units of the controller 7 will be described later in detail.

The analyzing apparatus 100 may include the second reflector 8 disposed at a distal end of the flue 1 side of the probe tube 2. The second reflector 8 is, for example, a corner cube or a plane mirror that reflects the measuring light Lm, which has propagated through the inside space of the probe tube 2, toward the light detector 4, during execution of the analysis. In this way, it is possible to measure intensity of the measuring light Lm that has passed through the space into which the exhaust gas Ge is introduced, using the light detector 4, and hence the measurement target gas Gs in the exhaust gas Ge can be analyzed.

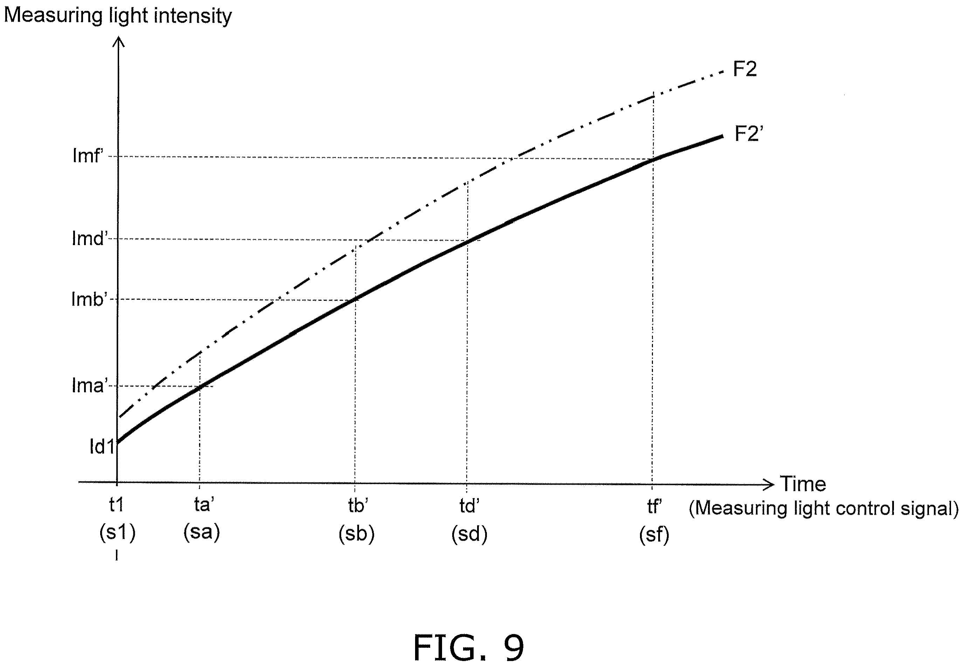

The analyzing apparatus 100 may include a purge gas inlet 9. The purge gas inlet 9 introduces purge air Pa (Fig. 9) into the inside space of the probe tube 2. In this way, it is possible to prevent the second reflector 8 and the like from being contaminated by the exhaust gas Ge.

### (2) Characteristic variation monitoring method of light source in analyzing apparatus

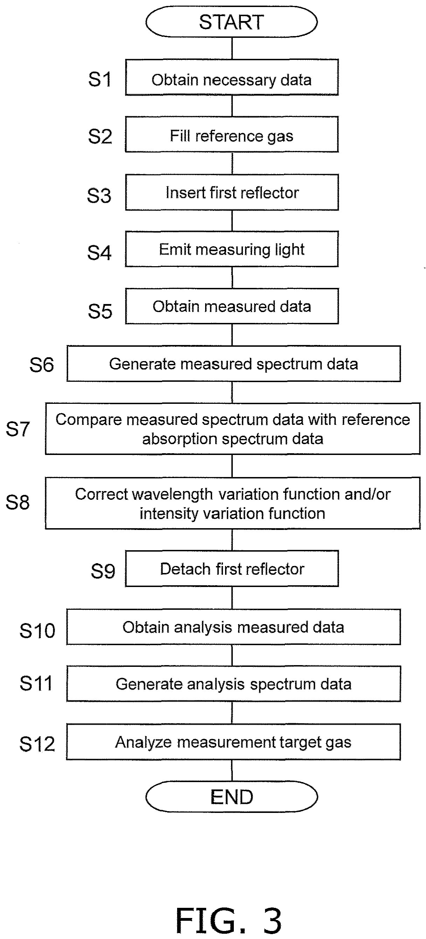

Next, there is described a method for checking characteristic variation (a characteristic variation monitoring method) of the light source in the analyzing apparatus 100 of this embodiment, with reference to a flowchart illustrated in Fig. 3.

Before performing the characteristic variation monitoring, the controller 7 obtains data necessary for analysis and the like (Step S1). Specifically, the controller 7 measures and obtains the reference absorption spectrum data Dss indicating an absorption spectrum of the reference gas Gc at the first concentration to be used for the characteristic variation monitoring, in advance, by a direct absorption method, using the light source 3 (the analyzing apparatus 100) calibrated appropriately and the reference gas Gc, and it stores the reference absorption spectrum data Dss in the storage 78.

In addition, it measures and obtains an absorption spectra Sp of the measurement target gas Gs at different predetermined concentrations and stores them in the storage 78, in the state where an appropriate analysis can be performed, when the analyzing apparatus 100 is shipped from a factory, or after the wavelength variation function and/or the intensity variation function is corrected as described below. In this way, a relationship between a concentration of the measurement target gas Gs and an absorption spectrum intensity of the measurement target gas Gs can be obtained.

Alternatively, it is also possible to store in the storage 78 a relationship Sp' between an absorbance at an (predetermined) absorption peak of the absorption spectrum of the reference gas Gc at the first concentration and an absorbance at an (predetermined) absorption peak of the absorption spectrum of the measurement target gas Gs at a predetermined concentration, for example.

When the characteristic variation monitoring is started, the reference gas introduction device 6 fills the filling space Sc with a gas containing the reference gas Gc (methane gas in this embodiment) at the first concentration (Step S2). In addition, the filling space controller 71 outputs a filling space forming instruction, and the first reflector 5 is inserted into the inside space of the probe tube 2 based on this instruction (Step S3). In this way, in this embodiment, the filling space Sc, which is filled with the reference gas Gc at the first concentration, is formed on the optical path of the measuring light Lm.

After that, the light source controller 72 increases the measuring light control signal s (current value) from s1 to sn periodically (in a ramp waveform) so as to output the signal s to the light source 3, and hence the light source 3 emits the measuring light Lm whose intensity varies over time (Step S4).

Alternatively, the light source controller 72 may output a signal for adjusting temperature of the light source 3 (for example, a signal for adjusting output intensity of a temperature regulator of the light source 3) so as to control the measuring light Lm (mainly a wavelength thereof).

During emission of the measuring light Lm, the measured data obtaining unit 74 obtains the detection light intensity signal indicating an intensity of the measuring light Lm received by the light detector 4 that has passed through the filling space Sc (referred to as a detection light beam), by A/D conversion by the detection light obtaining unit 73, every period shorter than a variation period of the measuring light control signal s. The measured data obtaining unit 74 associates the detection light intensities with time points when the detection light intensities are obtained, so as to obtain measured data Dm (Step S5).

Note that the measured data obtaining unit 74 may associate time points in the measured data Dm with signal values of the measuring light control signal s at the corresponding time points. In this way, it is possible to obtain not only the relationship between the time point and the detection light intensity but also the relationship between the measuring light control signal s input to the light source 3 and the detection light intensity.

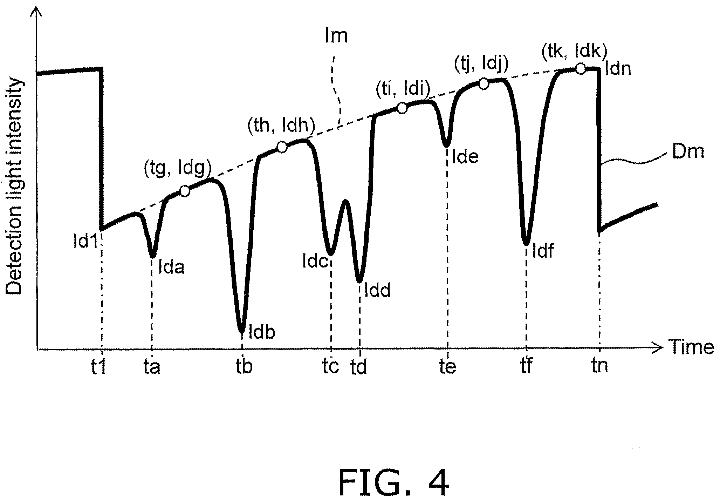

When Step S4 is executed as described above, the measured data Dm, which indicates the relationship between time points t1, t2, ... tn when the detection light intensities are obtained and detection light intensities Id1, Id2, ... Idn at the time points, can be obtained as illustrated in Fig. 4, for example. The measured data Dm illustrated in Fig. 4 has local minimum values that are detection light intensities of Ida, Idb, Idc, Idd, Ide, and Idf at time points ta, tb, tc, td, te, and tf, respectively after the time t1. The local minimum value in the measured data Dm is generated by absorption of the measuring light Lm by the reference gas Gc. In addition, dot lines in Fig. 4 indicate a relationship between an intensity of the measuring light Lm (the detection light beam) that is not absorbed by the reference gas Gc (referred to as non-absorbed light intensity Im) and a time point.

After the measured data Dm is obtained, the spectrum generating unit 75 generates the measured spectrum data Dms from the measured data Dm by the direct absorption method as described below (Step S6).

First, the spectrum generating unit 75 calculates non-absorbed light intensities Im1, Im2, ... Imn at the time points t1, t2, ... tn. Specifically, for example, the spectrum generating unit 75 calculates the non-absorbed light intensity Im1, Im2, ... Imn, using a function of the non-absorbed light intensity Im with respect to the time point, which is calculated by data fitting or linear interpolation, using coordinate values associating time points t1, tg, th, ti, tj, tk, and tn with detection light intensities Id1, Idg, Idh, Idi, Idj, Idk, and Idn at the time points in the measured data Dm, as illustrated by white spots in Fig. 4.

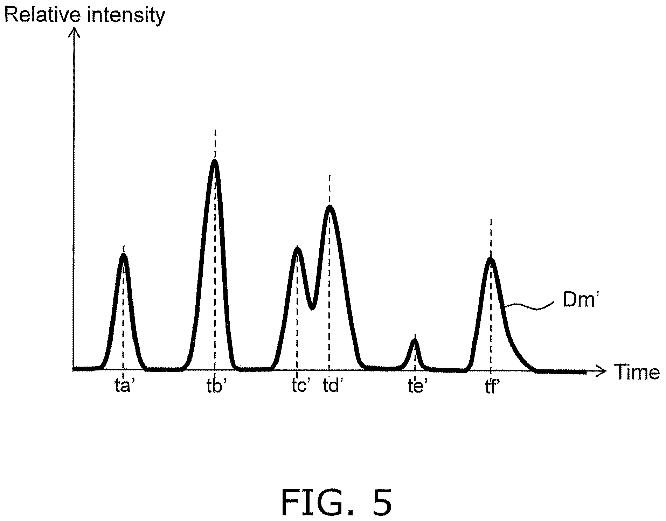

After that, the spectrum generating unit 75 calculates relative intensities at the time points t1, t2, ... tn in the measured data Dm, which are A*Log(Im1/Id1), A*Log(Im2/Id2), ... A*Log(Imn/Idn), based on the relationship (ratio) between the non-absorbed light intensity and the detection light intensity described above. This relative intensity corresponds to the absorbance in the absorption spectrum of the reference gas Gc obtained by the direct absorption method. Further, the spectrum generating unit 75 associates the time point (or the measuring light control signal s at the corresponding time point) with the relative intensity so as to generate preprocess data Dm' as illustrated in Fig. 5.

In the preprocess data Dm' illustrated in Fig. 5, relative intensity peaks are seen at time points ta' (signal value sa), tb' (signal value sb), tc' (signal value sc), td' (signal value sd), te' (signal value se), and tf (signal value sf) (which are not necessarily identical to the time points ta, tb, tc, td, te, and tf).

Next, the spectrum generating unit 75 calculates wavelengths of the measuring light Lm at the time points in the preprocess data Dm' using a wavelength variation function F1, which is currently stored in the storage 78 and indicates a relationship between the time point in the preprocess data Dm' (or the measuring light control signal s output at the corresponding time point) and the wavelength of the measuring light Lm to be emitted at the corresponding time point.

After that, the spectrum generating unit 75 associates the calculated wavelengths at the time points and the relative intensities at the corresponding time points so as to generate the measured spectrum data Dms.

After generating the measured spectrum data Dms, the spectrum comparing unit 76 calculates the difference between the measured spectrum data Dms and the reference absorption spectrum data Dss (Step S7).

For example, the spectrum comparing unit 76 allows the display of the controller 7 to display a result of plotting the generated measured spectrum data Dms and the reference absorption spectrum data Dss on the coordinate system of the wavelength (before correction) and the relative intensity. In this way, the difference between the two spectrum data can be visually checked.

Without limiting to the visual indication of a shift between the two spectra as described above, the spectrum comparing unit 76 may also digitize the shift. For example, the spectrum comparing unit 76 may numerically calculate a peak position difference between the two spectra as an index of a peak shift, or it may numerically calculate an intensity difference between the two spectra as an index of an intensity shift.

In this way, it is possible to check in detail both the temporal variations of the wavelength and the intensity of the measuring light Lm, based on the difference between the measured spectrum data Dms and the reference absorption spectrum data Dss by the direct absorption method. As a result, an influence to an absorbance due to a temporal variation of the measuring light Lm can also be checked.

In addition, by comparing the difference between the measured spectrum data Dms and the reference absorption spectrum data Dss, it is possible to determine whether or not it is necessary to calibrate the analyzing apparatus 100 using the same kind of gas as the measurement target gas Gs, for example. For example, if the difference is large, it can be determined that it is necessary to calibrate using the same kind of gas as the measurement target gas Gs.

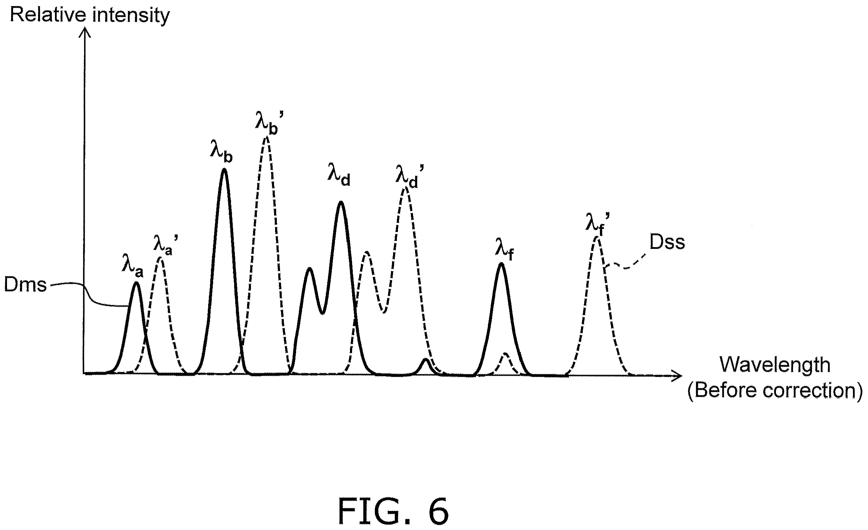

As a result of a comparison between the measured spectrum data Dms and the reference absorption spectrum data Dss, if peak positions and/or shapes in the measured spectrum data Dms do not match with corresponding absorption peak positions and/or shapes in the reference absorption spectrum data Dss as illustrated in Fig. 6, it means that the current wavelength variation function and/or the intensity variation function described later have become unidentical to the wavelength variation function F1 and/or an intensity variation function F2 stored currently in the storage 78 due to aging or the like of the light source 3 or other reason.

Therefore, if it is determined that the shift between the measured spectrum data Dms and the reference absorption spectrum data Dss is large, the correction unit 77 may correct the wavelength variation function F1 and/or the intensity variation function F2 so that the reference absorption spectrum data Dss matches with the measured spectrum data Dms (Step S8). After that, it is also possible to perform analysis of the measurement target gas Gs as described later (Steps S9 to S12).

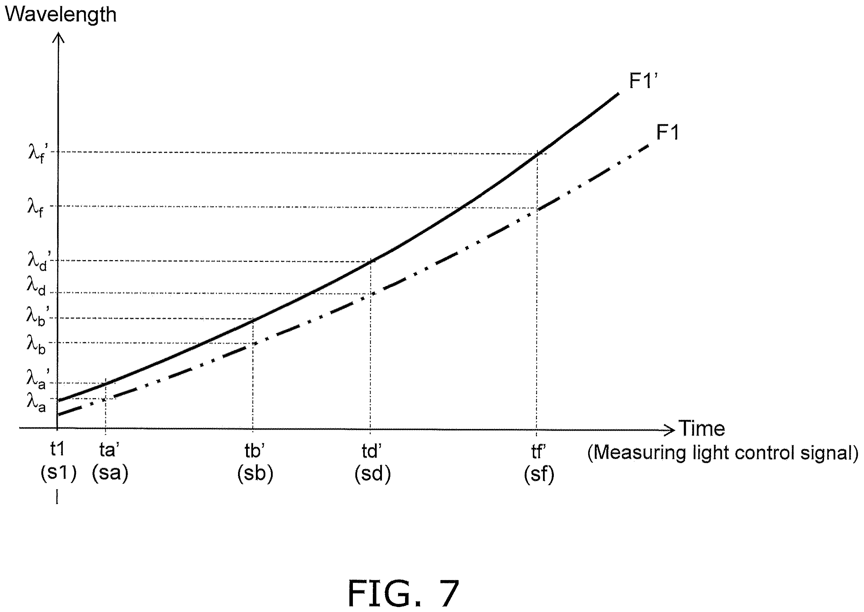

Specifically, the correction unit 77 calculates a new wavelength variation function F1' by data fitting or the like, using two-dimensional coordinate values (ta', λa'), (tb', λb'), (td', λd'), and (tf', λf'), which associate the time points ta', tb', td', and tf in the preprocess data Dm' with wavelengths λa', λb', λd', and λf' that are actual wavelengths at the corresponding time points (at which corresponding absorption peaks are seen in the reference absorption spectrum data Dss), so as to store the new wavelength variation function F1' in the storage 78. As a result, as illustrated in Fig. 7, the wavelength variation function F1 before correction illustrated by a two-dot dashed line is corrected to the new wavelength variation function F1' illustrated by a solid line.

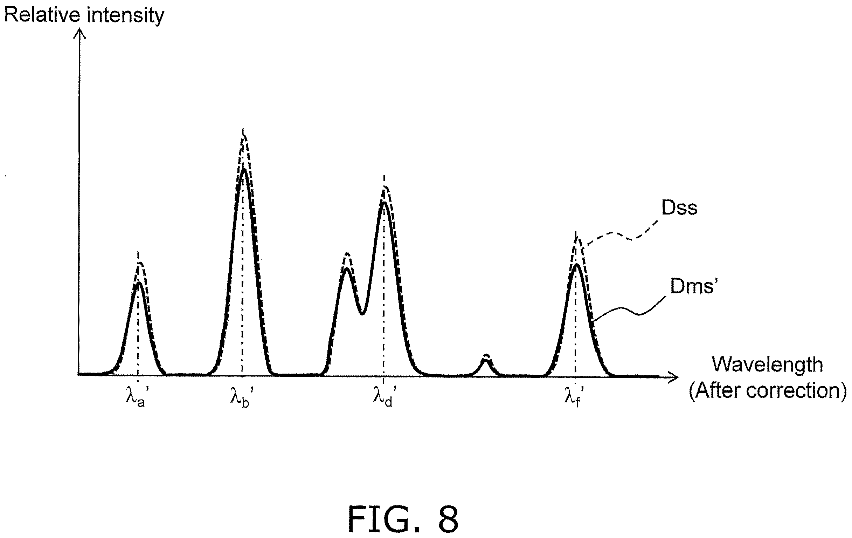

Using the wavelength variation function F1' corrected as described above, the wavelengths at the time points in the preprocess data Dm' are recalculated, so as to generate new measured spectrum data Dms' associating the newly calculated wavelengths with relative intensities at the corresponding wavelengths. Then, as illustrated in Fig. 8, the peak positions in the measured spectrum data Dms' matches with the corresponding absorption peak positions in the reference absorption spectrum data Dss. In other words, the wavelength variation function F1' after the correction is a function for matching the peak positions of the relative intensity in the measured spectrum data Dms' with the corresponding absorption peak positions in the reference absorption spectrum data Dss.

Next, the correction unit 77 corrects as necessary a shift (that is very small in general) between the relative intensity at each peak in the measured spectrum data Dms and the absorbance at the corresponding absorption peak in the reference absorption spectrum data Dss illustrated in Fig. 8. Here, it is supposed that absorbance values at the wavelengths λa', λb', λd', and λf' in the reference absorption spectrum data Dss are Ba, Bb, Bd, and Bf, respectively.

The correction unit 77 calculates a new intensity variation function F2' by data fitting or the like, using coordinate values (ta', Ima'), (tb', Imb'), (td', Imd'), and (tf, Imf), which associate the above-mentioned time points ta', tb', td', and tf (corresponding to the wavelengths λa', λb', λd', and λf') with non-absorbed light intensities Ima', Imb', Imd', and Imf that are actual non-absorbed light intensities at the corresponding time points, so as to store the new intensity variation function F2' in the storage 78.

The non-absorbed light intensities Ima', Imb', Imd', and Imf' can be calculated by, for example, solving equations indicating that relative intensities A*Log(Ima'/Ida'), A*Log(Imb'/Ida'), A*Log(Imd'/Idd'), and A*Log(Imf'/Idf') at the wavelengths λa', λb', λd', and λf' (time points ta', tb', td', and tf) are equal to the absorbance values Ba, Bb, Bd, and Bf, for Ima', Imb', Imd', and Imf, respectively. Note that Ida', Idb', Idd', and Idf are respectively detection light intensities at the time points ta', tb', td', and tf in the measured data Dm.

As described above, the correction unit 77 can correct the intensity variation function F2 before correction indicated by a two-dot dashed line to the intensity variation function F2' after correction indicated by a solid line, as illustrated in Fig. 9, for example.

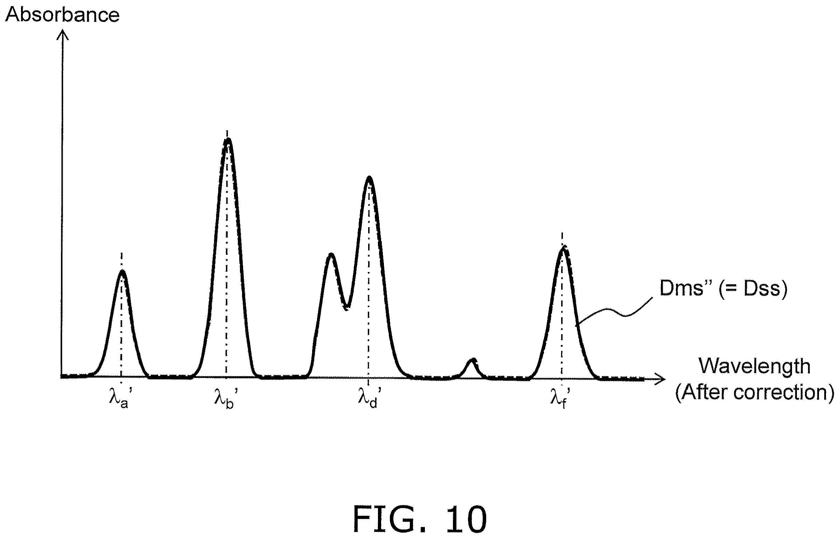

In addition, the measured spectrum data Dms', which is corrected with respect to the wavelength using the wavelength variation function F1' after correction, is further corrected with respect to the relative intensity using the intensity variation function F2' after correction (for example, the relative intensity is calculated using the non-absorbed light intensity calculated using the intensity variation function F2' after correction), so as to generate a new measured spectrum data Dms". Then, as illustrated in Fig. 10, the new measured spectrum data Dms" matches with the reference absorption spectrum data Dss. In other words, the intensity variation function F2' after correction is a function for matching the peak intensity of the relative intensity in the measured spectrum data Dms" with the absorbance at the corresponding absorption peak in the reference absorption spectrum data Dss.

As described above, the wavelength variation function and the intensity variation function are corrected using the wavelengths and the intensities (the absorbance values and the relative intensities) at the corresponding peaks in the two spectrum data, and hence these functions can be corrected by small amount of calculation. In addition, by using methane gas (hydrocarbon gas) as the reference gas Gc, the wavelength variation function and the intensity variation function can be accurately corrected using the absorption peaks appearing at many (six) points in a wide range of the wavelength range to be used for analysis. Note that, in the correction of the wavelength variation function and the intensity variation function described above, an example of the correction using four peaks is shown, but it is also possible to perform the correction using all the six peaks.

### (3) Analyzing method of measurement target gas in analyzing apparatus

An analyzing method of the measurement target gas Gs in the analyzing apparatus 100 is briefly described below.

When execution of the analysis of the measurement target gas Gs is instructed, the filling space controller71 detaches the first reflector 5 from the inside space of the probe tube 2 (Step S9). As a result, the measuring light Lm passes through the region of the probe tube 2 in which the measurement target gas Gs exists and is reflected by the second reflector 8, and it is received by the light detector 4. In addition, the purge air Pa is introduced from the purge gas inlet 9 into the inside space of the probe tube 2.

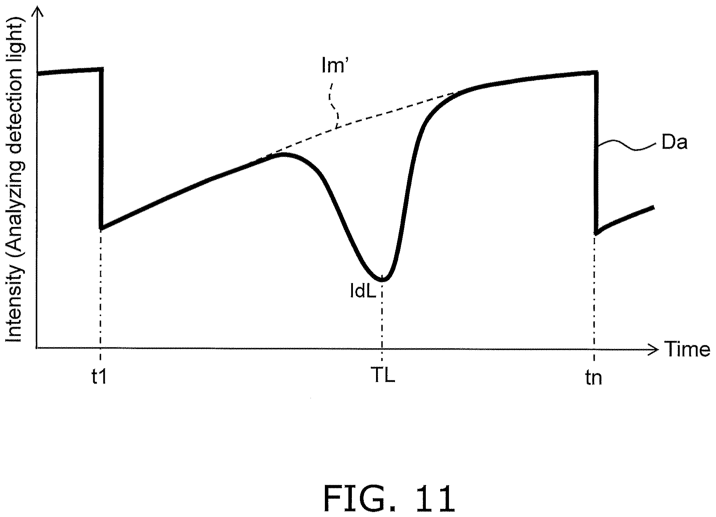

Next, in the same manner as Step S5 described above, the intensity of the measuring light Lm that has passed though the region in which the measurement target gas Gs exists and are received by the light detector 4 (the analyzing detection light beam) is obtained as the analysis measured data Da (Step S10). For example, it is supposed that the analysis measured data Da as illustrated in Fig. 11 is obtained, which has a local minimum value IdL at a time point TL.

After obtaining the analysis measured data Da, in the same manner as Step S6 described above, the spectrum generating unit 75 generates preprocess analysis data Da', which associates the time point when the analyzing intensity of the detection light beam is obtained with the relative intensity of the analyzing detection light beam at the corresponding time point, from the analysis measured data Da. The spectrum generating unit 75 calculates the wavelength of the analyzing detection light beam at each time point in the preprocess analysis data Da' using the wavelength variation function F1' after correction, and it associates the calculated wavelength with the relative intensity at the wavelength so as to generate analysis spectrum data Das'.

Next, the spectrum generating unit 75 corrects the relative intensity of the generated analysis spectrum data Das' using the intensity variation function F2' after correction, so as to generate a new analysis spectrum data Das. For example, the non-absorbed light intensity of the analyzing detection light beam is calculated using the intensity variation function F2' after correction, and the corrected relative intensity (namely, the absorbance) can be calculated using a ratio between the non-absorbed light intensity and the analyzing intensity of the detection light beam (Step S11).

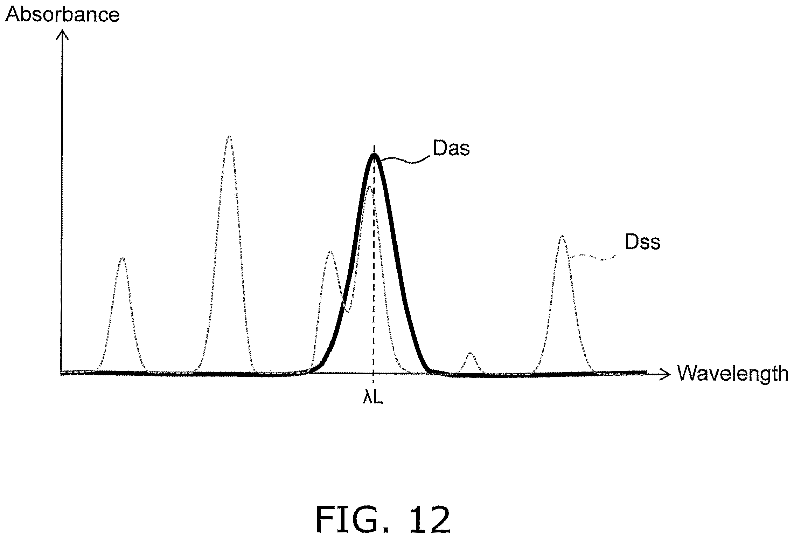

By generating the analysis spectrum data Das by the process described above, it is possible to obtain the analysis spectrum data Das in which a peak of the relative intensity is seen at a wavelength λL as illustrated in Fig. 12, for example. The peak position and the peak intensity of the relative intensity in the analysis spectrum data Das obtained as described above respectively match with the absorption peak position of the absorption spectrum of the measurement target gas Gs (at the same concentration) and the absorbance at the absorption peak.

Therefore, the user or the controller 7 can perform the analysis of the measurement target gas Gs (such as calculation of the concentration) by, for example, comparing the analysis spectrum data Das obtained as described above with the absorption spectrum Sp of the measurement target gas Gs at the predetermined concentration measured in advance to be stored in the storage 78, and/or comparing with the absorption spectrum of the reference gas Gc at the first concentration measured in advance (reference absorption spectrum data Dss), and/or using a calibration curve of the measurement target gas Gs (Step S12).

In addition, in this embodiment, even if the measurement target gas Gs is a gas that is difficult to prepare as the reference gas Gc on site, it is possible to accurately create the analysis spectrum data Das to be used for analysis of the measurement target gas Gs that is hard to handle as described above, by correcting the intensity variation function and the wavelength variation function using the reference gas that is relatively easy to handle.

As described above, because the intensity variation function and the wavelength variation function are defined as functions, the wavelength and the relative intensity outside the wavelength range in which the absorption peak of the reference gas Gc appears can also be corrected using the intensity variation function and the wavelength variation function described above. As a result, even if the absorption peak of the measurement target gas Gs exists outside the wavelength range, the accurate analysis spectrum data Das can be calculated.

In addition, as illustrated in Fig. 12, if the peak position in the analysis spectrum data Das (absorption peak in the absorption spectrum of the measurement target gas Gs) exists within the wavelength range in which the absorption peak is seen in the reference absorption spectrum data Dss, the wavelength variation function and the intensity variation function are corrected using the reference gas Gc having the absorption peak in the wavelength range. Thus, using the wavelength variation function and the intensity variation function when the measurement target gas Gs is analyzed, more accurate analysis spectrum data Das can be calculated.

Note that, if a difference between the analysis spectrum data Das and the absorption spectrum of the measurement target gas Gs is too large to perform an appropriate analysis (for example, if data fitting is not succeeded), it is possible to use the reference gas Gc or to use the analysis spectrum data Das obtained in the analysis and the absorption spectrum of the measurement target gas Gs for further performing the correction of the wavelength variation function and the intensity variation function in the same manner as Steps S1 to S6 described above.

### (4) Second embodiment

### (4-1) Structure of analyzing apparatus according to second embodiment

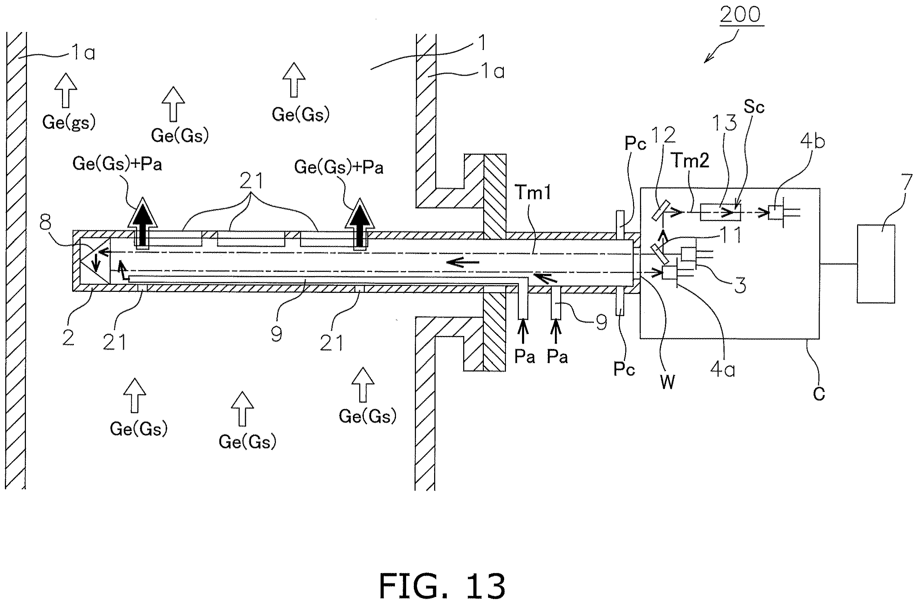

In the analyzing apparatus 100 according to the first embodiment described above, the filling space Sc is formed in the inside space of the probe tube 2. The position of filling space Sc is not limited to the inside space of the probe tube 2 as long as it is a position on the path that the measuring light Lm can pass. In an analyzing apparatus 200 according to the second embodiment, the filling space Sc is disposed inside the casing C housing the light source 3 as illustrated in Fig. 13.

The analyzing apparatus 200 has basically the same structure as the analyzing apparatus 100 according to the first embodiment, except that the filling space Sc is disposed inside the casing C, and that two light detector (a first light detector 4a and a second light detector 4b) are disposed, and that the first reflector 5 is not disposed. Therefore, in the analyzing apparatus 200, description of the same structure as the analyzing apparatus 100 of the first embodiment is omitted.

The analyzing apparatus 200 includes a beam splitter 11 inside the casing C. The beam splitter 11 is, for example, a beam splitter or a coupler that splits the measuring light Lm emitted from the light source 3 into a first optical path Tm1 toward the inside space of the probe tube 2 and a second optical path Tm2 toward a known substance cell 13 that will be described later. The analyzing apparatus 200 includes a mirror 12. The mirror 12 reflects the measuring light Lm split into the second optical path Tm2 to propagate to the known substance cell 13 and the second light detector 4b.

The analyzing apparatus 200 includes the known substance cell 13. The known substance cell 13 is, for example, a sample cell filled with the reference gas Gc at a predetermined concentration.

The analyzing apparatus 200 includes the first light detector 4a. The first light detector 4a receives the measuring light Lm that has passed through the inside space of the probe tube 2. In other words, the first light detector 4a measures intensity of the measuring light Lm that has been absorbed by the measurement target gas Gs (the analyzing detection light beam).

The analyzing apparatus 200 includes the second light detector 4b. The second light detector 4b receives the measuring light Lm that has passed through the filling space Sc inside the known substance cell 13. In other words, the second light detector 4b measures the detection light intensity for generating the measured data Dm in the first embodiment.

As described above, the filling space Sc is disposed on an optical path different from the optical path toward the space in which the measurement target gas Gs exists, and thereby the analyzing apparatus 200 can monitor a characteristic variation of the light source 3 simultaneously with the analysis of the measurement target gas Gs. As a result, the analyzing apparatus 200 can accurately monitor the timing of correcting (or calibrating) the intensity variation function and the wavelength variation function of the analyzing apparatus 200, for example.

Alternatively, it is also possible to automatically perform the correction (or calibration) of the intensity variation function and the wavelength variation function every predetermined period, for example. In this way, the measurement target gas Gs can be analyzed more accurately.

### (5) Other embodiments

Although the embodiments of the present invention are described above, the present invention is not limited to those embodiments but can be variously modified within the scope of the invention without deviating from the spirit thereof. In particular, the embodiments and variations described in this specification can be arbitrarily combined as necessary.

### (A) Another embodiment of analyzing apparatus

The analyzing apparatuses 100 and 200 of the first and second embodiments described above are probe type analyzing apparatuses. The technique of the first and second embodiments can be applied also to a cross stack type analyzing apparatus.

### (B) Another embodiment of wavelength variation function and intensity variation function

The wavelength variation function and the intensity variation function are defined as functions of the time point in the first and second embodiments. The wavelength variation function and the intensity variation function may be defined as numerical data associating the time point with the wavelength and the intensity of the measuring light Lm at the corresponding time point, respectively.

The correction of the wavelength variation function as numerical data is described below using the example described in the first embodiment. It can be performed by, for example, associating the wavelengths λa', λb', λd', and λf' (that are fixed values) at which the absorption peaks are seen in the reference absorption spectrum data Dss with the time points ta', tb', td', and tf at which the corresponding relative intensity peaks are seen in the preprocess data Dm' illustrated in Fig. 6.

On the other hand, the correction of the intensity variation function can be performed by, for example, associating the time points ta', tb', td', and tf described above with the non-absorbed light intensities Ima', Imb', Imd', and Imf at the corresponding time points calculated as described above.

The wavelength and the intensity at a time point that is not defined as a specific numerical value in the wavelength variation function and the intensity variation function as numerical data are calculated by, for example, linear interpolation between existing numerical data.

In addition, in the first and second embodiments described above, the wavelength variation function and the intensity variation function are corrected so that the measured spectrum data Dms matches with the reference absorption spectrum data Dss. However, on the contrary, it is also possible to use the wavelength variation function and the intensity variation function to match the reference absorption spectrum data Dss generated by theoretical calculation or the like with the measured spectrum data Dms including influence of the analyzing apparatus, for example.

### (C) Another embodiment of correction of light source characteristics

In the first and second embodiments described above, the light source controller 72 uses the fixed signal value range of the measuring light control signal s. If it is determined that the difference between the measured spectrum data Dms and the reference absorption spectrum data Dss is so large as a predetermined value or more that the analysis spectrum data Das that can be used for analysis of the measurement target gas Gs cannot be obtained in the current signal value range, the light source controller 72 may change the signal value range of the measuring light control signal s from the current range.

For example, the signal value range can be adjusted by increasing or decreasing the signal value s1 of the ramp waveform measuring light control signal s from the current signal value, and/or by increasing or decreasing the signal value sn from the current signal value. It is also possible to shift the signal value of the ramp waveform measuring light control signal s to a larger side or a smaller side, or to increase or decrease a ramp wave period of the measuring light control signal s, or to increase or decrease a slope of the ramp wave.

When the signal value range of the measuring light control signal s is changed as described above, the correction unit 77 corrects the wavelength variation function F1 and the intensity variation function F2 stored in the storage 78.

In this way, even if the effect of aging of the light source 3 becomes significant, the analysis spectrum data Das that can be used for analysis can be obtained when the measurement target gas Gs is analyzed.

### (D) Another embodiment of analysis target of analyzing apparatus

The analyzing apparatuses 100 and 200 according to the first and second embodiments may be used for measuring a temperature in the space in which the measurement target gas Gs exists, by utilizing that each of the absorption peak intensities of the measurement target gas Gs individually varies depending on the temperature of the measurement target gas Gs. In such analyzing apparatuses 100 and 200, the temperature of the space in which the measurement target gas Gs exists is measured by utilizing the fact that an intensity ratio among absorption peaks depends on the temperature of the measurement target gas Gs.

The nonlinear intensity variation function F2 and/or wavelength variation function F1 as illustrated in Figs. 7 and 9 are used for calibrating the analyzing apparatuses 100 and 200. Thus, even if characteristics of the light source 3 have changed due to a temporal variation or the like, the temperature of the space in which the measurement target gas Gs exists can be measured more accurately by using the intensity ratio among a plurality of (particularly three or more) absorption peaks.

### INDUSTRIAL APPLICABILITY

The present invention can be applied widely to analyzing apparatuses for analyzing a gas based on light absorption of the gas and to analyzing methods in the analyzing apparatuses.

### REFERENCE SIGNS LIST

- 100, 200: analyzing apparatus
- 1: flue
- 1a: wall
- 2: probe tube
- 3: light source
- 4: light detector
- 4a: first light detector
- 4b: second light detector
- 5: first reflector
- 6: reference gas introduction device
- 7: controller
- 8: second reflector
- 9: purge gas inlet
- 11: beam splitter
- 12: mirror
- 13: known substance cell
- 21: introduction hole
- 71: filling space controller
- 72: light source controller
- 73: detection light obtaining unit
- 74: measured data obtaining unit
- 75: spectrum generating unit
- 76: spectrum comparing unit
- 77: correction unit
- 78: storage
- C: casing
- Da: analysis measured data
- Da': preprocess analysis data
- Das: analysis spectrum data
- Dm: measured data
- Dm': preprocess data
- Dms, Dms', Dms": measured spectrum data
- Dss: reference absorption spectrum data
- F1, F1': wavelength variation function
- F2, F2': intensity variation function
- Gc: reference gas
- Ge: exhaust gas
- Gs: measurement target gas
- Lm: measuring light
- Pa: purge air
- Pc: reference gas introduction tube
- Sc: reference gas filling space, filling space
- Tm1: first optical path
- Tm2: second optical path
- W, W1: optical window
- f: flange

## Claims

1. An analyzing apparatus for analyzing a measurement target gas using measuring light emitted from a light source, the apparatus comprising:
a reference gas filling space formed on an optical path of the measuring light and filled with a reference gas different from the measurement target gas at a first concentration;
a spectrum generating unit configured to generate measured spectrum data, in which a wavelength of a detection light beam is associated with a relative intensity of the detection light beam, the detection light beam being the measuring light that has passed through the reference gas filling space; and
a spectrum comparing unit configured to calculate a difference between the measured spectrum data and reference absorption spectrum data obtained by measuring in advance an absorption spectrum of the reference gas at the first concentration by a direct absorption method.

2. The analyzing apparatus according to claim 1, wherein the spectrum generating unit calculates the relative intensity of the detection light beam based on a relationship between an intensity of the measuring light that is not absorbed by the reference gas and an intensity of the detection light beam.

3. The analyzing apparatus according to claim 1 or 2, wherein
the spectrum generating unit generates analysis spectrum data to be used for analyzing the measurement target gas, the analysis spectrum data being data in which a wavelength of an analyzing detection light beam is associated with a relative intensity of the analyzing detection light beam, the analyzing detection light beam being the measuring light that has passed through an area in which the measurement target gas exists, and
the relative intensity of the analyzing detection light beam is corrected by using an intensity variation function that matches a peak intensity of the relative intensity of the detection light beam in the measured spectrum data with an absorbance at a corresponding absorption peak in the reference absorption spectrum data.

4. The analyzing apparatus according to any one of claims 1 to 3, wherein
the spectrum generating unit generates analysis spectrum data to be used for analyzing the measurement target gas, the analysis spectrum data being data in which a wavelength of an analyzing detection light beam is associated with a relative intensity of the analyzing detection light beam, the analyzing detection light beam being the measuring light that has passed through an area in which the measurement target gas exists, and
the wavelength of the analyzing detection light beam in the analysis spectrum data is calculated by using a wavelength variation function that matches a peak position of the relative intensity of the detection light beam in the measured spectrum data with a corresponding absorption peak position of the reference absorption spectrum data.

5. The analyzing apparatus according to any one of claims 1 to 4, further comprising:
a light source controller configured to output to the light source a measuring light control signal that controls the intensity and/or the wavelength of the measuring light while temporally varying the signal within a predetermined signal value range; and
a measured data obtaining unit configured to measure the intensity of the detection light beam and to generate measured data by associating the intensity of the detection light beam with the measuring light control signal when the intensity of the detection light beam is measured, wherein
the spectrum generating unit generates the measured spectrum data based on the measured data.

6. The analyzing apparatus according to claim 5, wherein when a difference between the reference absorption spectrum data and the measured spectrum data becomes a predetermined value or more, the light source controller changes the signal value range of the measuring light control signal from the current signal value range.

7. The analyzing apparatus according to any one of claims 1 to 6, further comprising a reference gas introduction device configured to introduce the reference gas into the reference gas filling space.

8. The analyzing apparatus according to any one of claims 1 to 7, wherein the measurement target gas is one of moisture, carbon monoxide, carbon dioxide, oxygen, hydrogen chloride, hydrogen fluoride, hydrogen sulfide, hydrogen bromide, ammonia, nitrogen oxides, tetramethyl indium, and trimethyl gallium.

9. The analyzing apparatus according to any one of claims 1 to 8, wherein the reference gas is moisture or hydrocarbon gas.

10. A method for analyzing a measurement target gas using measuring light emitted from a light source, the method comprising:
forming a reference gas filling space on an optical path of the measuring light, the reference gas filling space being filled with a reference gas different from the measurement target gas at a first concentration;
generating measured spectrum data, in which a wavelength of a detection light beam is associated with a relative intensity of the detection light beam, the detection light beam being the measurement light that has passed through the reference gas filling space; and
calculating a difference between the measured spectrum data and reference absorption spectrum data obtained by measuring in advance an absorption spectrum of the reference gas at the first concentration by a direct absorption method.
